# EUROPEAN PATENT APPLICATION

(11) **EP 3 628 381 A1**
(43) Date of publication of application: **01.04.2020**
(21) Application number: 19199730.3
(22) Date of filing: 26.09.2019
(51) Int. Cl.: A63F 13/213, A63F 13/355, A63F 13/42

(54) **GAME PICTURE DISPLAY METHOD AND APPARATUS, STORAGE MEDIUM AND ELECTRONIC DEVICE**

(30) Priority: 26.09.2018 CN 201811125752
(71) Applicant: GUANGDONG OPPO MOBILE TELECOMMUNICATIONS CORP., LTD., Wusha, Chang'an Dongguan, Guangdong 523860 (CN)
(72) Inventor: CHEN, Yan, Dongguan, Guangdong (CN)
(74) Representative: Manitz Finsterwald Patent- und Rechtsanwaltspartnerschaft mbB

(57) **Abstract**

Disclosed are a game picture display method and apparatus, a storage medium and an electronic device. The game picture display method, applied to an electronic device, includes: receiving (101) a human body information capturing instruction sent by a server; calling (102) a camera module to perform image capture on a user according to the human body information capturing instruction to obtain a color image and a depth image of a continuous frame; determining (103), during the image capture, skeleton point information of the user according to the color image and the depth image; sending (104) the skeleton point information to the server to enable the server to return a corresponding game picture according to the skeleton point information; and displaying (105), in a display screen, the game picture returned by the serve.

## Description

### Cross-Reference to Related Applications

The present application claims priority to Patent Application No. CN 201811125752.5, filed with the Chinese Patent Office on September 26, 2018, and entitled "Game Picture Display Method and Apparatus, Storage Medium and Electronic Device", the contents of which are hereby incorporated by reference in its entirety.

### Technical Field

The present disclosure relates to the technical field of computers, and in particular, to a game picture display method and apparatus, a storage medium and an electronic device.

### Background

With the development of terminal technologies, mobile terminals, especially mobile phones, are becoming more and more powerful in functionality, and they have gradually become an indispensable part of people's lives.

At present, more and more users like to play online games with mobile phones. The implementation method is usually as follows: a user inputs relevant command instructions through a touch screen of a mobile phone, such as forward, backward, jumping, and use skills, these command instructions are transmitted to a cloud virtual host via the mobile phone, and the cloud virtual host determines a game interaction result according to the command instructions, and sends an interactive rendered picture to the mobile phone to enable the mobile phone to display the interactive rendered picture to the user, so that the user can perform the next operation. Although this game mode can avoid the influence on a game caused by the lack of rendering ability of a mobile phone itself, it can only be applied to the game logic of some games, such as motion sensing games with strict requirements on state synchronization including fighting games and role playing games. The efficient and real-time transmission of data cannot be guaranteed, and the limitation is strong.

### Summary

An embodiment of the present disclosure provides a game picture display method and apparatus, a storage medium and an electronic device, which can be applied to various online games, and have low limitation.

The embodiment of the present disclosure provides a game picture display method, applied to a server. The method may include the following operations.

A game request sent by an electronic device is received, the game request carrying a target game identifier.

A human body information capturing instruction is sent to the electronic device according to the game request to enable the electronic device to return skeleton point information of a user according to the human body information capturing instruction.

A game picture is determined according to the skeleton point information returned by the electronic device and the target game identifier.

The game picture is sent to the electronic device to enable the electronic device to display the game picture.

The embodiment of the present disclosure provides a game picture display method, applied to an electronic device. The method may include the following operations.

A human body information capturing instruction sent by a server is received.

A camera module is called to perform image capture on a user according to the human body information capturing instruction to obtain a color image and a depth image of a continuous frame.

During the image capture, skeleton point information of the user is determined according to the color image and the depth image.

The skeleton point information is sent to the server to enable the server to return a corresponding game picture according to the skeleton point information.

The game picture returned by the server is displayed in a display screen.

The embodiment of the present disclosure provides a game picture display apparatus, applied to an electronic device. The apparatus may include:
a receiving module configured to receive a human body information capturing instruction sent by a server;
a capturing module configured to call a camera module to perform image capture on a user according to the human body information capturing instruction to obtain a color image and a depth image of a continuous frame;
a determination module configured to determine, during the image capture, skeleton point information of the user according to the color image and the depth image;
a sending module configured to send the skeleton point information to the server to enable the server to return a corresponding game picture according to the skeleton point information; and
a display module configured to display, in a display screen, the game picture returned by the server.

The embodiment of the present disclosure provides a game picture display apparatus, applied to a server. The apparatus may include:
a receiving module configured to receive a game request sent by an electronic device, the game request carrying a target game identifier;
a first sending module configured to send a human body information capturing instruction to the electronic device according to the game request to enable the electronic device to return skeleton point information of a user according to the human body information capturing instruction;
a determination module configured to determine a game picture according to the skeleton point information returned by the electronic device and the target game identifier; and
a second sending module configured to send the game picture to the electronic device to enable the electronic device to display the game picture.

The embodiment of the present disclosure also provides a computer-readable storage medium, having multiple instructions stored therein. The instructions may be adapted to be loaded by a processor to perform any of the above game picture display methods.

The embodiment of the present disclosure also provides an electronic device. The electronic device may include a processor and a memory. The processor may be electrically connected to the memory. The memory may be configured to store instructions and data. The processor may be configured to perform the operations of any of the above game picture display methods.

According to the game picture display method and apparatus, the storage medium and the electronic device provided by the present disclosure, a human body information capturing instruction sent by a server is received, a camera module is called to perform image capture on a user according to the human body information capturing instruction to obtain a color image and a depth image of a continuous frame, during the image capture, skeleton point information of the user is determined according to the color image and the depth image, the skeleton point information is sent to the server to enable the server to return a corresponding game picture according to the skeleton point information, and then the game picture returned by the server is displayed in a display screen, so that the user can input a game instruction through the limb motion. The present disclosure is applied to various online games, and has low limitation. Moreover, by transmitting skeleton point information instead of a captured image to the server for processing, it is beneficial to give full play to the respective advantages of the server and the electronic device, thereby improving the processing efficiency, minimizing a limb action of the user and a time difference between corresponding picture displays, and achieving a good game synchronization effect.

### Brief Description of the Drawings

The technical solutions of the present disclosure and the beneficial effects thereof will be apparent from the following detailed description of the Detailed Description of the Embodiments in conjunction with the drawings.
Fig. 1 is a flowchart of a game picture display method according to an embodiment of the present disclosure;
Fig. 2 is another flowchart of a game picture display method according to an embodiment of the present disclosure;
Fig. 3 is yet another flowchart of a game picture display method according to an embodiment of the present disclosure;
Fig. 4 is a schematic frame diagram of a game picture display system according to an embodiment of the present disclosure;
Fig. 5 is a schematic scenario diagram of electronic device processing according to an embodiment of the present disclosure;
Fig. 6 is a schematic structure diagram of a game picture display apparatus according to an embodiment of the present disclosure;
Fig. 7 is another schematic structure diagram of a game picture display apparatus according to an embodiment of the present disclosure;
Fig. 8 is a schematic structure diagram of a game picture display apparatus according to an embodiment of the present disclosure;
Fig. 9 is a schematic structure diagram of an electronic device according to an embodiment of the present disclosure; and
Fig. 10 is another schematic structure diagram of an electronic device according to an embodiment of the present disclosure.

### Detailed Description of the Embodiments

The technical solutions in the embodiments of the present disclosure are clearly and completely described in the following with reference to the accompanying drawings in the embodiments of the present disclosure. It is apparent that the described embodiments are merely a part of the embodiments of the present disclosure, but not all of the embodiments. All other embodiments obtained by those skilled in the art based on the embodiments of the present disclosure without creative efforts fall within the scope of protection of the present disclosure.

The embodiments of the present disclosure provide a game picture display method and apparatus, a storage medium and an electronic device.

A game picture display method, applied to an electronic device, includes that: a human body information capturing instruction sent by a server is received; a camera module is called to perform image capture on a user according to the human body information capturing instruction to obtain a color image and a depth image of a continuous frame; during the image capture, skeleton point information of the user is determined according to the color image and the depth image; the skeleton point information is sent to the server to enable the server to return a corresponding game picture according to the skeleton point information; and the game picture returned by the server is displayed in a display screen.

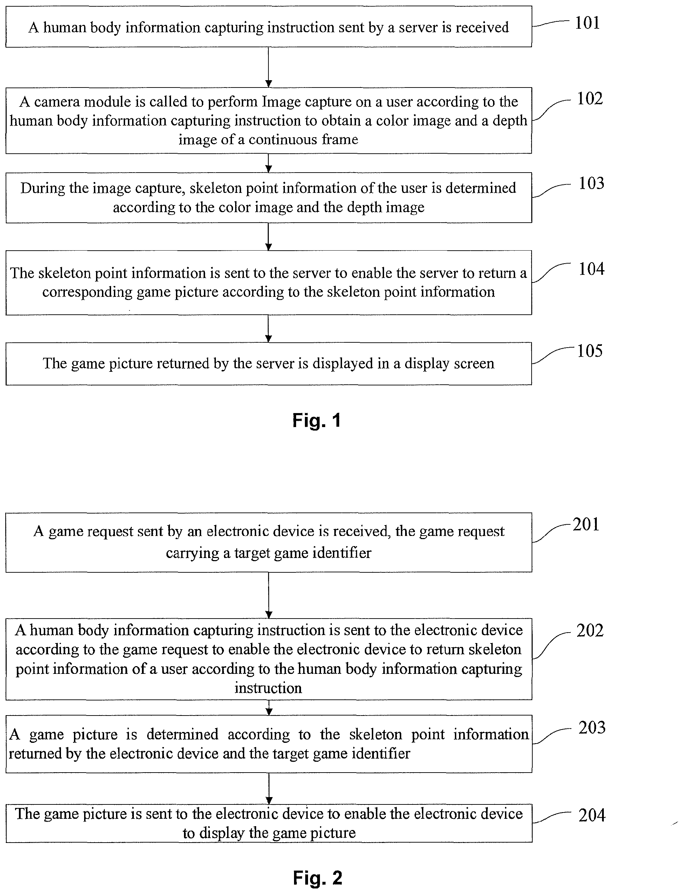

As shown in Fig. 1, Fig. 1 is a flowchart of a game picture display method according to an embodiment of the present disclosure. The specific flow is as follows.

101: A human body information capturing instruction sent by a server is received.

In the present embodiment, an electronic device and a server may communicate through a wireless network, and the wireless network may include a Wireless Fidelity (WiFi) or a cellular mobile network.

For example, before operation 101, the game picture display method may further include that:
a preset selection interface is displayed, the preset selection interface including at least one game identifier;
a microphone module is called to capture voice information of the user;
a target game identifier is determined from the at least one game identifier according to the voice information; and
a game request is generated according to the target game identifier, and the game request is transmitted to the server to enable the server to return the human body information capturing instruction according to the game request.

In the present embodiment, the preset selection interface may be manually set, and is mainly used to display, to the user, all online games that can be provided by the server. The online games mainly include a motion sensing game. The game identifier may be a unique identifier of the online game in the server, and may be a game name. The preset selection interface may further include a cursor, the user may control the cursor to move up, down, left, and right by voice, and select a target game identifier by the moving position of the cursor, or the user may select the target game identifier by direct voice input, thereby implementing remote control without a manual operation on a screen of the electronic device.

102: A camera module is called to perform image capture on a user according to the human body information capturing instruction to obtain a color image and a depth image of a continuous frame.

In the present embodiment, the camera module may include a structured light module, or a dual camera, etc., and is mainly used to acquire a color image and a depth image. As an exemplary implementation the camera module may be used to capture an image at a first shooting frequency, and detect whether a character (i.e., a user) appears in the image in real time. In response to detecting that a character (i.e., a user) appears in the image, the character may be tracked and photographed at a second shooting frequency, and the first shooting frequency may be less than the second shooting frequency.

103: During the image capture, skeleton point information of the user is determined according to the color image and the depth image.

In the present embodiment, the skeleton point information mainly includes related information of the skeletal points, such as two-dimensional coordinates or spatial coordinates of the skeleton points, where the skeletal points may be key nodes of the human skeleton, which may be artificially designated.

For example, the skeleton point information includes two-dimensional coordinates of skeleton points. At this time, operation 103 may include that:
the color image and the depth image are processed using a trained learning model to identify the skeleton points in the color image or the depth image; and
image coordinates of the skeleton points are determined as the two-dimensional coordinates of the skeleton points.

In the present embodiment, the learning model may be a neural network model, the color image and the depth image may be two images of the same size, the same skeleton point should have the same coordinate position on the two images, and the skeleton point may be a key node of the human skeleton, which may be artificially set. For example, the skeleton point may include a head node representing the head, shoulder nodes representing the left and right shoulders respectively, a waist node representing the waist, and the like.

104: The skeleton point information is sent to the server to enable the server to return a corresponding game picture according to the skeleton point information.

In the present embodiment, when the server receives the skeleton point information, the limb motion condition of the user may be analyzed according to the skeleton point information, related characters or props in an online game are controlled according to the limb motion condition, and a corresponding game picture is generated and returned to the electronic device.

It should be noted that the electronic device may package the skeleton point information through a network communication protocol such as a Protocol Buffer (PB) protocol and a JavaScript Object Notation (Json) protocol before sending the skeleton point information, and send the communication protocol to the server along with packaged data. The server needs to unpack the packaged data according to the communication protocol and restore into the skeleton point information.

105: The game picture returned by the server is displayed in a display screen.

For example, operation 105 may include that:
an ambient brightness of a surrounding environment is detected;
a display brightness is determined according to the ambient brightness; and
the game picture returned by the server is displayed in a display screen according to the display brightness.

In the present embodiment, the display brightness may be set in advance. For example, a developer or user may set a plurality of display brightness for different ambient brightness for association storage, or the display brightness may be automatically selected by the electronic device according to the past brightness adjustment habit of the user. For example, the electronic device may automatically detect a current ambient brightness every time the user adjusts the display brightness, and store the ambient brightness in association with the display brightness.

In addition, after operation 105, the game picture display method may further include that:
it is detected whether an event to be processed is received, the event to be processed including a message to be processed and a call to be processed;
the display screen is divided into a first window and a second window in a preset ratio in response to detecting that an event to be processed is received; and
the game picture is displayed in the first window, and the event to be processed is displayed in the second window.

In the present embodiment, during the game playing, if the electronic device receives an incoming call or a message, the display screen may be divided into two windows, and different events are processed through different windows, so that no picture switching is required.

It can be seen that the game picture display method provided by the present disclosure is applied to the electronic device, a human body information capturing instruction sent by a server is received, a camera module is called to perform image capture on a user according to the human body information capturing instruction to obtain a color image and a depth image of a continuous frame, and then during the image capture, skeleton point information of the user is determined according to the color image and the depth image, the skeleton point information is sent to the server to enable the server to return a corresponding game picture according to the skeleton point information, and then the game picture returned by the server is displayed in a display screen, so that the user can input a game instruction through the limb motion. The present disclosure is applied to various online games, and has low limitation. Moreover, by transmitting skeleton point information instead of a captured image to the server for processing, it is beneficial to give full play to the respective advantages of the server and the electronic device, thereby improving the processing efficiency, minimizing a limb action of the user and a time difference between corresponding picture displays, and achieving a good game synchronization effect.

A game picture display method, applied to a server, includes that: a game request sent by an electronic device is received, the game request carrying a target game identifier; a human body information capturing instruction is sent to the electronic device according to the game request to enable the electronic device to return skeleton point information of a user according to the human body information capturing instruction; a game picture is determined according to the skeleton point information returned by the electronic device and the target game identifier; and the game picture is sent to the electronic device to enable the electronic device to display the game picture.

As shown in Fig. 2, Fig. 2 is a flowchart of a game picture display method according to an embodiment of the present disclosure. The specific flow is as follows.

201: A game request sent by an electronic device is received, the game request carrying a target game identifier.

In the present embodiment, the game identifier may be a game name. An electronic device and a server may communicate through a wireless network such as WiFi or a cellular mobile network.

202: A human body information capturing instruction is sent to the electronic device according to the game request to enable the electronic device to return skeleton point information of a user according to the human body information capturing instruction.

In the present embodiment, the skeleton point information mainly includes related information of the skeletal points, such as two-dimensional coordinates or spatial coordinates of the skeleton points, where the skeletal points may be key nodes of the human skeleton, which may be artificially set. For example, the skeleton point may include a head node representing the head, shoulder nodes representing the left and right shoulders respectively, a waist node representing the waist, and the like.

203: A game picture is determined according to the skeleton point information returned by the electronic device and the target game identifier.

It should be noted that before the electronic device transmits the skeleton point information to the server, the skeleton point information may be network-packed and then transmitted through the network protocol. At this time, the information received by the server is not original skeleton point information, and needs to be parsed and restored.

For example, operation 203 may include that the following operations.
(1) Limb motion information of the user is determined according to the skeleton point information returned at adjacent moments.

For example, the skeleton point information includes two-dimensional coordinates of skeleton points. At this time, operation (1) may include that:
a motion trajectory of corresponding skeleton points is determined according to the two-dimensional coordinates returned at the adjacent moments;
a limb action of the user and an action amplitude of the limb action are determined according to the motion trajectory; and
the limb action and the action amplitude are determined as the limb motion information of the user.

In the present embodiment, since the completion of each limb motion takes a certain period of time, it is not instantaneously implemented. Therefore, if the limb motion of the user is to be analyzed, a motion trajectory of each skeleton point may be determined first, limb actions of the user, such as jumping, waving and bending, may be determined according to the motion trajectories of all skeleton points, and action amplitudes may be calculated according to a difference between two-dimensional coordinates, such as high jumping by 50 mm, or waving the left hand by 20 mm.

It should be noted that, considering that the user may need a certain preparation time to enter the game, when receiving the skeleton point information returned by the electronic device, it may be first judged whether the user is ready, only if the user is ready, it is only necessary to detect the motion trajectory of the limb of the user in real time, that is, before operation (1), the game picture display method may further include the following operations.

A limb posture corresponding to the two-dimensional coordinates returned at a current moment is determined.

It is judged whether the limb posture matches a preset starting posture.

In response to judging that the limb posture matches the preset starting posture, the operation of determining the limb motion information of the user according to the skeleton point information returned at adjacent moments is performed.

In response to judging that the limb posture does not match the preset starting posture, two-dimensional coordinates of skeleton points returned at a next moment are acquired as two-dimensional coordinates of skeleton points at a current moment, and the operation of determining a limb posture corresponding to the two-dimensional coordinates of the skeleton points at a current moment is performed.

In the present embodiment, the preset starting posture may be system default, or may be set by the user according to the preference. For the instantaneous skeleton point information, the limb posture of the user can be determined according to a relative coordinate position between the skeleton points. When the limb posture is the same as the preset starting posture, it is indicated that the user is ready to work, and the game can be started. When the limb posture is different from the preset starting posture, it is indicated that the user is not ready, and it is necessary to continue detecting the limb posture of the user.
(2) A target instruction group is determined from multiple preset instruction groups according to the target game identifier.
   In the present embodiment, since multiple game applications are stored in the server, the skills used by each game application may be different, so different game applications may correspond to different preset instruction groups, and the preset instruction group may be stored in association with the game identifier.
(3) A preset instruction corresponding to the limb motion information is acquired from the target instruction group to serve as an interaction instruction.
   In the present embodiment, the corresponding preset instruction may be matched in the target instruction group according to the limb action and the action amplitude, where different preset instructions may be matched for different limb actions or different action amplitudes of the same limb action.
(4) A game picture is determined according to the interaction instruction.

In the present embodiment, a game character may be controlled to perform a corresponding action or launch a corresponding skill according to the interaction instruction, and a corresponding game picture is generated according to the executed action or the launched skill.

204: The game picture is sent to the electronic device to enable the electronic device to display the game picture.

For example, operation 204 may include that the following operations.
a network state of the electronic device is detected;
a size of the game picture is adjusted according to the network state; and
the adjusted game picture is sent to the electronic device to enable the electronic device to display the adjusted game picture.

In the present embodiment, since the network state and the amount of data determine the length of time required for data transmission, in order to reduce the picture delay of the electronic device, the user feels the synchronization of the limb action and the game picture as much as possible. When the network state of the electronic device is good, the game picture is transmitted to the electronic device by the default size. When the network state of the electronic device is poor, the size of the game picture is reduced to reduce the amount of data transmission, and the reduction ratio may be determined according to the network state. As the network state is worse, the reduction is greater.

It can be seen that the game picture display method provided by the present embodiment is applied to a server. A game request sent by an electronic device is received, the game request carrying a target game identifier; a human body information capturing instruction is sent to the electronic device according to the game request to enable the electronic device to return skeleton point information of a user according to the human body information capturing instruction; then, a game picture is determined according to the skeleton point information returned by the electronic device and the target game identifier; and the game picture is sent to the electronic device to enable the electronic device to display the game picture, so that the user can input a game instruction through the limb motion. The apparatus is applied to various online games, and has low limitation. Moreover, the server processes skeleton point information instead of a captured image, so that a large amount of redundant data is removed, thereby improving the processing efficiency, minimizing a limb action of the user and a time difference between corresponding picture displays, and achieving a good game synchronization effect.

In the present embodiment, the description will be made from the perspective of the game picture display apparatus, and integration of the game picture display apparatus into the electronic device and the server will be taken as an example for detailed description.

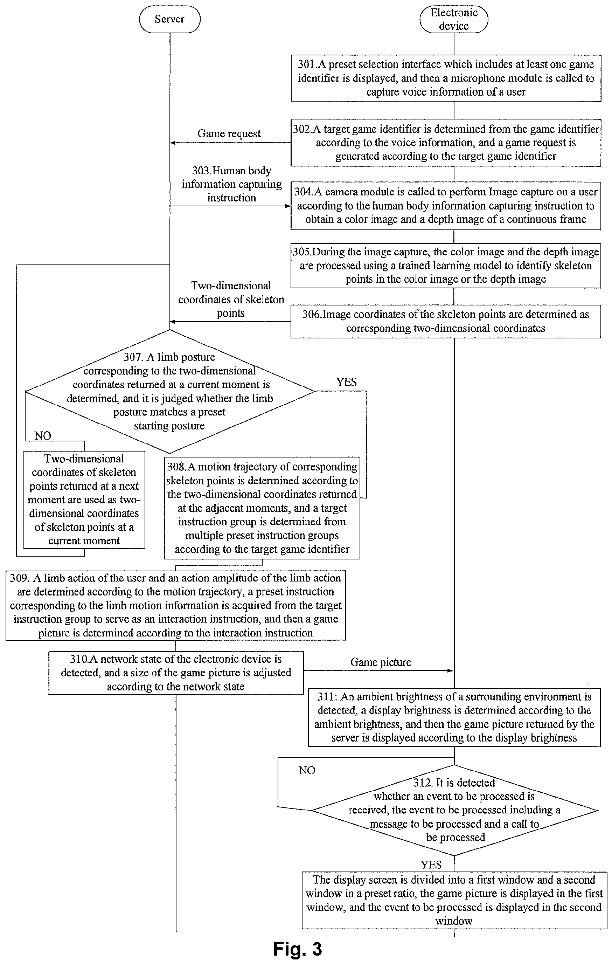

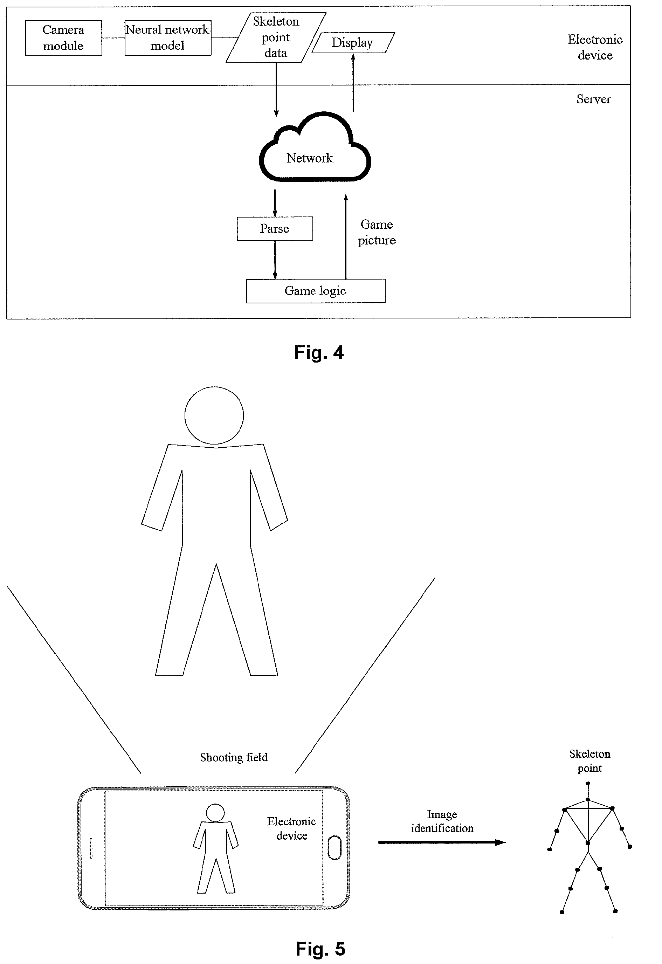

Referring to Fig. 3 and Fig. 4, the specific flow of a game picture display method may be as follows.

301: An electronic device displays a preset selection interface which includes at least one game identifier, and then calls a microphone module to capture voice information of a user.

For example, the preset selection interface may be a main page of an application, the game identifier may be a game name, and the game identifier may be arranged and displayed on the preset selection interface in a certain order, where the arrangement order may be system default or may be flexibly adjusted according to the frequency of use of online games by the users in the past. For example, an online game has a higher frequency of use, and a game identifier thereof may be arranged at a fronter position.

302: The electronic device determines a target game identifier from the at least one game identifier according to the voice information, generates a game request according to the target game identifier, and then sends the game request to a server.

For example, a user can directly say a game name of an online game needing to be experienced, such as "xxx", or select by controlling the movement of a cursor on the preset selection interface by voice, and then the electronic device may send the selection result to the server through WiFi.

303: The server sends a human body information capturing instruction to the electronic device according to the game request.

304: The electronic device calls a camera module to perform image capture on a user according to the human body information capturing instruction to obtain a color image and a depth image of a continuous frame.

For example, after receiving the human body information capturing instruction, the camera module may first perform image capture at a normal shooting frequency, detect whether there is a user in the shooting field through a person identification algorithm, and continuously track, once a user is detected, the user at a higher shooting frequency (for example, 30 frames per second).

305: During the image capture, the electronic device processes the color image and the depth image using a trained learning model to identify the skeleton points in the color image or the depth image.

306: The electronic device uses image coordinates of the skeleton points as the two-dimensional coordinates of the skeleton points, and sends the two-dimensional coordinates of the skeleton point to the server.

For example, the learning model may be a neural network model. The skeleton point may be a human body key node artificially designated, such as a head node, a left shoulder node, a right shoulder node, or a waist node, as shown in Fig. 5. Before sending skeleton point data to the server, the electronic device may package it through a communication protocol and send the packaged data along with the communication protocol to the server.

307: The server determines a limb posture corresponding to the two-dimensional coordinates returned at a current moment, and judges whether the limb posture matches a preset starting posture. The operation 308 is performed in response to judging that the limb posture matches the preset starting posture. In response to judging that the limb posture does not match the preset starting posture, two-dimensional coordinates of skeleton points returned at a next moment are used as two-dimensional coordinates of skeleton points at a current moment, and the operation of determining a limb posture corresponding to the two-dimensional coordinates of the skeleton points at a current moment is performed.

For example, the server needs to parse the packed data first, restore two-dimensional coordinates of 17 skeleton points, and then determine the limb posture of the user according to a relative coordinate position between the skeleton points. When the limb posture is the same as the preset starting posture, it is indicated that the user is ready, and the game can be started. When the limb posture is different from the preset starting posture, it is indicated that the user is not ready, and it is necessary to continue detecting the limb posture of the user.

308: The server determines a motion trajectory of corresponding skeleton points according to the two-dimensional coordinates returned at the adjacent moments, and determines a target instruction group from multiple preset instruction groups according to the target game identifier.

For example, for coordinate data returned at each moment, the server may first judge whether the coordinate data is complete. If it is incomplete, such as missing the two-dimensional coordinates of a certain skeleton point, the missing skeleton points may be subjected to position prediction according to the complete data returned in the previous several times to complete data, and then the motion trajectory is updated.

309: The server determines a limb action of the user and an action amplitude of the limb action according to the motion trajectory, acquires, from the target instruction group, a preset instruction corresponding to the limb motion information to serve as an interaction instruction, and then determines a game picture according to the interaction instruction.

For example, for a waving action, a preset instruction matching the action of waving the left hand of the user by 5 mm may be moving forward, and a preset instruction matching the action of waving the left hand of the user by 10 mm may be running forward. The server will perform a series of game logic processing according to the interaction instruction, and render the game picture.

310: The server detects a network state of the electronic device, adjusts a size of the game picture according to the network state, and sends the adjusted game picture to the electronic device.

For example, the amount of data transmission can be flexibly adjusted according to the network state. For example, when the network state is good, the game picture is transmitted according to the normal size. When the network state is poor, the size of the game picture is reduced to reduce the amount of data transmission.

311: The electronic device detects an ambient brightness of a surrounding environment, determines a display brightness according to the ambient brightness, and then displays, according to the display brightness, the game picture returned by the server.

312: The electronic device detects whether an event to be processed is received, the event to be processed including a message to be processed and a call to be processed. Operation 313 is performed in response to detecting that an event to be processed is received, and detection is performed again in response to detecting that an event to be processed is not received.

In the present embodiment, when the electronic device displays the game picture to the user, the display brightness can be automatically adjusted according to the ambient brightness, and it is detected whether the incoming call or the message needs to be processed in time.

313: The electronic device divides the display screen into a first window and a second window in a preset ratio, displays the game picture in the first window, and displays the event to be processed in the second window.

For example, the user can process the event to be processed in the second window by voice, such as controlling the answer or hang up of an incoming call by voice, or closing or replying to a message by voice, so that the game can be continued without contacting the electronic device.

According to the method described in the foregoing embodiment, the present embodiment will be further described from the perspective of the game picture display apparatus. The game picture display apparatus may be implemented as an independent entity or implemented by being integrated in an electronic device such as a terminal. The terminal may include a mobile phone, a tablet computer and the like.

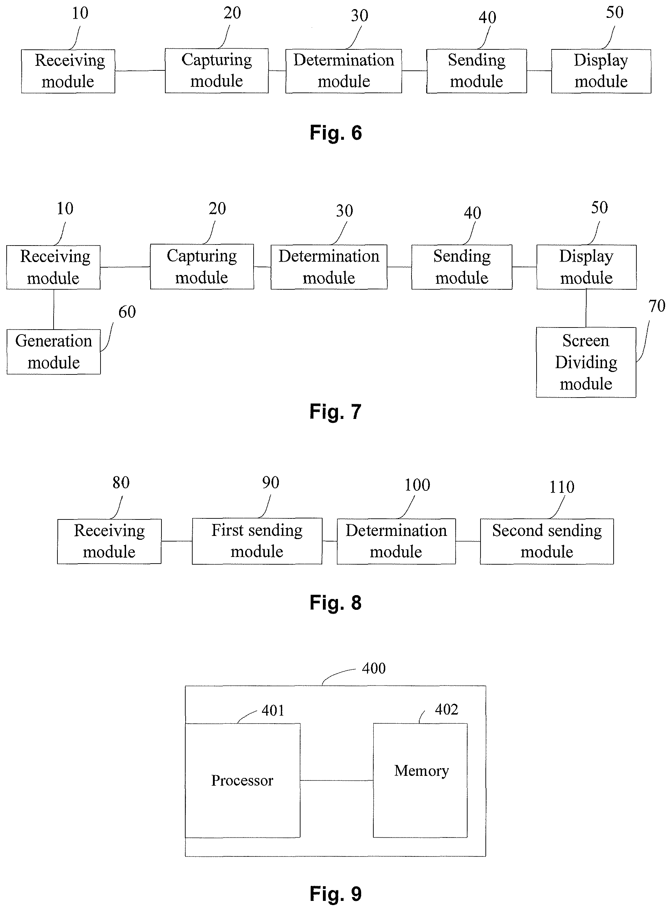

Referring to Fig. 6, Fig. 6 illustrates a game picture display apparatus provided according to an embodiment of the present disclosure. The game picture display apparatus, applied to an electronic device, may include: a receiving module 10, a capturing module 20, a determination module 30, a sending module 40 and a display module 50.

### (1) Receiving module 10

The receiving module 10 is configured to receive a human body information capturing instruction sent by a server.

In the present embodiment, an electronic device and a server may communicate through a wireless network, and the wireless network may include a WiFi or a cellular mobile network.

For example, referring to Fig. 7, the game picture display apparatus may further include a generation module 60, configured to:
display, before the receiving module 10 receives a human body information capturing instruction sent by a server, a preset selection interface, the preset selection interface including at least one game identifier;
call a microphone module to capture voice information of the user;
determine a target game identifier from the at least one game identifier according to the voice information; and
generate a game request according to the target game identifier, and transmit the game request to the server to enable the server to return the human body information capturing instruction according to the game request.

In the present embodiment, the preset selection interface may be manually set, and is mainly used to display, to the user, all online games that can be provided by the server. The online games mainly include a motion sensing game. The game identifier may be a unique identifier of the online game in the server, and may be a game name. The preset selection interface may further include a cursor, the user may control the cursor to move up, down, left, and right by voice, and select a target game identifier by the moving position of the cursor, or the user may select the target game identifier by direct voice input, thereby implementing remote control without a manual operation on a screen of the electronic device.

### (2) Capturing module 20

The capturing module 20 is configured to call a camera module to perform image capture on a user according to the human body information capturing instruction to obtain a color image and a depth image of a continuous frame.

In the present embodiment, the camera module may include a structured light module, or a dual camera, etc., and is mainly used to acquire a color image and a depth image. As an exemplary implementation the camera module may be used to capture an image at a first shooting frequency, and detect whether a character (i.e., a user) appears in the image in real time. In response to detecting that a character (i.e., a user) appears in the image, the character may be tracked and photographed at a second shooting frequency, and the first shooting frequency may be less than the second shooting frequency.

### (3) Determination module 30

The determination module 30 is configured to determine, during the image capture, skeleton point information of the user according to the color image and the depth image.

In the present embodiment, the skeleton point information mainly includes related information of the skeletal points, such as two-dimensional coordinates or spatial coordinates of the skeleton points, where the skeletal points may be key nodes of the human skeleton, which may be artificially designated.

For example, the skeleton point information includes two-dimensional coordinates of skeleton points. At this time, the determination module 30 may be configured to:
process the color image and the depth image using a trained learning model to identify the skeleton points in the color image or the depth image; and
determine image coordinates of the skeleton points as the two-dimensional coordinates of the skeleton points.

In the present embodiment, the learning model may be a neural network model, the color image and the depth image may be two images of the same size, the same skeleton point should have the same coordinate position on the two images, and the skeleton point may be a key node of the human skeleton, which may be artificially set. For example, the skeleton point may include a head node representing the head, shoulder nodes representing the left and right shoulders respectively, a waist node representing the waist, and the like.

### (4) Sending module 40

The sending module 40 is configured to send the skeleton point information to the server to enable the server to return a corresponding game picture according to the skeleton point information.

In the present embodiment, when the server receives the skeleton point information, the limb motion condition of the user may be analyzed according to the skeleton point information, related characters or props in an online game are controlled according to the limb motion condition, and a corresponding game picture is generated and returned to the electronic device.

It should be noted that the electronic device may package the skeleton point information through a network communication protocol such as a Protocol Buffer (PB) protocol and a JavaScript Object Notation (Json) protocol before sending the skeleton point information, and send the communication protocol to the server along with packaged data. The server needs to unpack the packaged data according to the communication protocol and restore into the skeleton point information.

### (5) Display module 50

The display module 50 is configured to display, in a display screen, the game picture returned by the server.

For example, the display module 50 may be configured to:
detect an ambient brightness of a surrounding environment;
determine a display brightness according to the ambient brightness; and
display, in a display screen according to the display brightness, the game picture returned by the server.

In the present embodiment, the display brightness may be set in advance. For example, a developer or user may set a plurality of display brightness for different ambient brightness for association storage, or the display brightness may be automatically selected by the electronic device according to the past brightness adjustment habit of the user. For example, the electronic device may automatically detect a current ambient brightness every time the user adjusts the display brightness, and store the ambient brightness in association according to the display brightness.

In addition, the game picture display apparatus may further include a screen dividing module 70, configured to:
detect whether an event to be processed is received, the event to be processed including a message to be processed and a call to be processed;
divide, in response to detecting that an event to be processed is received, the display screen into a first window and a second window in a preset ratio; and
display the game picture in the first window, and display the event to be processed in the second window.

In the present embodiment, during the game playing, if the electronic device receives an incoming call or a message, the display screen may be divided into two windows, and different events are processed through different windows, so that no picture switching is required.

During the specific implementation, the foregoing units may be implemented as a separate entity, or may be implemented in any combination, and may be implemented as the same or a plurality of entities. The specific implementation of the foregoing units refers to the foregoing method embodiments, and details are not described herein again.

It can be seen that the game picture display apparatus provided by the present disclosure is applied to the electronic device, the receiving module 10 receives a human body information capturing instruction sent by a server, the capturing module 20 calls a camera module to perform image capture on a user according to the human body information capturing instruction to obtain a color image and a depth image of a continuous frame, the determination module 30 determines, during the image capture, skeleton point information of the user according to the color image and the depth image, the sending module 40 sends the skeleton point information to the server to enable the server to return a corresponding game picture according to the skeleton point information, and then the display module 50 displays the game picture returned by the server in a display screen, so that the user can input a game instruction through the limb motion. The present disclosure is applied to various online games, and has low limitation. Moreover, by transmitting skeleton point information instead of a captured image to the server for processing, it is beneficial to give full play to the respective advantages of the server and the electronic device, thereby improving the processing efficiency, minimizing a limb action of the user and a time difference between corresponding picture displays, and achieving a good game synchronization effect.

According to the method described in the foregoing embodiment, the present embodiment will be further described from the perspective of the game picture display apparatus. The game picture display apparatus may be implemented as an independent entity or implemented by being integrated in a server. The server may be a cloud server, etc.

Referring to Fig. 8, Fig. 8 illustrates a game picture display apparatus provided according to an embodiment of the present disclosure. The game picture display apparatus, applied to a server, may include: a receiving module 80, a first sending module 90, a determination module 100 and a second sending module 110.

### (6) Receiving module 80

The receiving module 80 is configured to receive a game request sent by an electronic device, the game request carrying a target game identifier.

In the present embodiment, the game identifier may be a game name. An electronic device and a server may communicate through a wireless network such as WiFi or a cellular mobile network.

### (7) First sending module 90

The first sending module 90 is configured to send a human body information capturing instruction to the electronic device according to the game request to enable the electronic device to return skeleton point information of a user according to the human body information capturing instruction.

In the present embodiment, the skeleton point information mainly includes related information of the skeletal points, such as two-dimensional coordinates or spatial coordinates of the skeleton points, where the skeletal points may be key nodes of the human skeleton, which may be artificially set. For example, the skeleton point may include a head node representing the head, shoulder nodes representing the left and right shoulders respectively, a waist node representing the waist, and the like.

### (8) Determination module 100

The determination module 100 is configured to determine a game picture according to the skeleton point information returned by the electronic device and the target game identifier.

It should be noted that before the electronic device transmits the skeleton point information to the server, the skeleton point information may be network-packed and then transmitted through the network protocol. At this time, the information received by the server is not original skeleton point information, and needs to be parsed and restored.

For example, the determination module 100 may be configured to:
(1) determine limb motion information of the user according to the skeleton point information returned at adjacent moments.

For example, the skeleton point information includes two-dimensional coordinates of skeleton points. At this time, the determination module 100 may be further configured to:
determine a motion trajectory of corresponding skeleton points according to the two-dimensional coordinates returned at the adjacent moments;
determine a limb action of the user and an action amplitude of the limb action according to the motion trajectory; and
determine the limb action and the action amplitude as the limb motion information of the user.

In the present embodiment, since the completion of each limb motion takes a certain period of time, it is not instantaneously implemented. Therefore, if the limb motion of the user is to be analyzed, a motion trajectory of each skeleton point may be determined first, limb actions of the user, such as jumping, waving and bending, may be determined according to the motion trajectories of all skeleton points, and action amplitudes may be calculated according to a difference between two-dimensional coordinates, such as high jumping by 50 mm, or waving the left hand by 20 mm.

It should be noted that, considering that the user may need a certain preparation time to enter the game, when receiving the skeleton point information returned by the electronic device, it may be first judged whether the user is ready, only if the user is ready, it is only necessary to detect the motion trajectory of the limb of the user in real time, that is, before operation (1), the determination module 100 may also be configured to:
determine a limb posture corresponding to the two-dimensional coordinates returned at a current moment;
judge whether the limb posture matches a preset starting posture;
perform, in response to judging that the limb posture matches the preset starting posture, the operation of determining the limb motion information of the user according to the skeleton point information returned at adjacent moments; and
acquire, in response to judging that the limb posture does not match the preset starting posture, two-dimensional coordinates of skeleton points returned at a next moment as two-dimensional coordinates of skeleton points at a current moment, and return to perform the operation of determining a limb posture corresponding to the two-dimensional coordinates of the skeleton points at a current moment.

In the present embodiment, the preset starting posture may be system default, or may be set by the user according to the preference. For the instantaneous skeleton point information, the limb posture of the user can be determined according to a relative coordinate position between the skeleton points. When the limb posture is the same as the preset starting posture, it is indicated that the user is ready to work, and the game can be started. When the limb posture is different from the preset starting posture, it is indicated that the user is not ready, and it is necessary to continue detecting the limb posture of the user.

The determination module may be configured to: (2) determine a target instruction group from multiple preset instruction groups according to the target game identifier.

In the present embodiment, since multiple game applications are stored in the server, the skills used by each game application may be different, so different game applications may correspond to different preset instruction groups, and the preset instruction group may be stored in association with the game identifier.

The determination module may be configured to: (3) acquire, from the target instruction group, a preset instruction corresponding to the limb motion information to serve as an interaction instruction.

In the present embodiment, the corresponding preset instruction may be matched in the target instruction group according to the limb action and the action amplitude, where different preset instructions may be matched for different limb actions or different action amplitudes of the same limb action.

The determination module may be configured to: (4) determine a game picture according to the interaction instruction.

In the present embodiment, a game character may be controlled to perform a corresponding action or launch a corresponding skill according to the interaction instruction, and a corresponding game picture is generated according to the executed action or the launched skill.

### (9) Second sending module 110

The second sending module 110 is configured to send the game picture to the electronic device to enable the electronic device to display the game picture.

For example, the second sending module 110 may be configured to:
detect a network state of the electronic device;
adjust a size of the game picture according to the network state; and
send the adjusted game picture to the electronic device to enable the electronic device to display the adjusted game picture.

In the present embodiment, since the network state and the amount of data determine the length of time required for data transmission, in order to reduce the picture delay of the electronic device, the user feels the synchronization of the limb action and the game picture as much as possible. When the network state of the electronic device is good, the game picture is transmitted to the electronic device by the default size. When the network state of the electronic device is poor, the size of the game picture is reduced to reduce the amount of data transmission, and the reduction ratio may be determined according to the network state. As the network state is worse, the reduction is greater.

It can be seen that the game picture display apparatus provided by the present embodiment is applied to a server. The receiving module 80 receives a game request sent by an electronic device, the game request carrying a target game identifier; the first sending module 90 sends a human body information capturing instruction to the electronic device according to the game request to enable the electronic device to return skeleton point information of a user according to the human body information capturing instruction; then, the determination module 100 determines a game picture according to the skeleton point information returned by the electronic device and the target game identifier; and the second sending module 110 sends the game picture to the electronic device to enable the electronic device to display the game picture, so that the user can input a game instruction through the limb motion. The apparatus is applied to various online games, and has low limitation. Moreover, the server processes skeleton point information instead of a captured image, so that a large amount of redundant data is removed, thereby improving the processing efficiency, minimizing a limb action of the user and a time difference between corresponding picture displays, and achieving a good game synchronization effect.

In addition, the embodiment of the present disclosure also provides an electronic device. The electronic device may be a smart phone, a tablet computer or the like. As shown in Fig. 9, the electronic device 400 includes a processor 401 and a memory 402. The processor 401 is electrically connected to the memory 402.

The processor 401 is a control center of the electronic device 400, and is configured to connect all parts of the entire electronic device by utilizing various interfaces and lines, to run or load an application program stored in the memory 402, and to call data stored in the memory 402 to execute various functions of the electronic device and process data, so as to wholly monitor the electronic device.

In the present embodiment, the processor 401 in the electronic device 400 loads instructions corresponding to the process of one or more application programs into the memory 402 according to the following operations, and the processor 401 runs the application program stored in the memory 402, thereby implementing various functions.

A human body information capturing instruction sent by a server is received.

A camera module is called to perform image capture on a user according to the human body information capturing instruction to obtain a color image and a depth image of a continuous frame.

During the image capture, skeleton point information of the user is determined according to the color image and the depth image.

The skeleton point information is sent to the server to enable the server to return a corresponding game picture according to the skeleton point information.

The game picture returned by the server is displayed in a display screen.

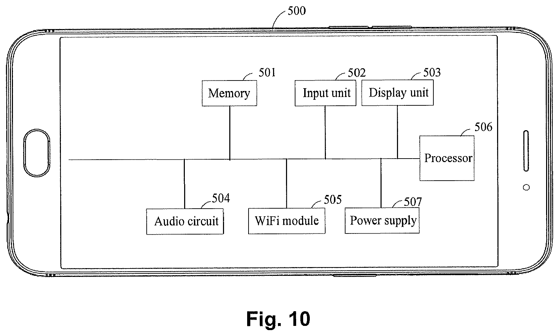

Referring to Fig. 10, Fig. 10 is a schematic structure diagram of an electronic device according to an embodiment of the present disclosure. The electronic device 500 may include a memory 501 having one or more computer-readable storage media, an input unit 502, a display unit 503, an audio circuit 504, a WiFi module 505, a processor 506 including one or more processing cores, a power supply 507, and other components. A person skilled in the art may understand that an electronic device structure shown in Fig. 10 is not limitative to the electronic device, and the mobile phone may include parts more or fewer than those shown in the figure, or combine some parts, or have different part arrangements.

The memory 501 may be configured to store application programs and data. The application programs stored in the memory 501 include executable codes. The application programs may constitute various functional modules. The processor 506 executes various function applications and performs data processing by running the application programs stored in the memory 501. The memory 501 may mainly include a storage program area and a storage data area, where the storage program area may store an operating system, an application program required for at least one function (such as a sound playing function and an image playing function); and the storage data area may store data (such as audio data and phone books) created according to the use of the electronic device. In addition, the memory 501 may include a high-speed Random Access Memory (RAM), and may further include a non-volatile memory such as a disk storage device, a flash device, or other non-volatile solid storage devices. Correspondingly, the memory 501 may further include a memory controller which provides access of the processor 506 and the input unit 502 to the memory 501.

The input unit 502 may be configured to receive input digital or character information or user feature information (such as fingerprints), and to generate keyboard, mouse, joystick, optical or trackball signal inputs related to user settings and function controls. In an exemplary embodiment, the input unit 502 may include a touch-sensitive surface, and other input devices. The touch-sensitive surface also referred to as a touch display screen or a touchpad may collect touch operations of a user thereon or nearby (such as an operation of the user on the touch-sensitive surface or nearby the touch-sensitive surface by using any suitable objects or attachments such as a finger or a stylus), and drive a corresponding connecting apparatus according to a preset program. Optionally, the touch-sensitive surface may include a touch detection apparatus and a touch controller. The touch detection apparatus detects the touch orientation of the user, detects a signal brought by the touch operation, and transmits the signal to the touch controller; and the touch controller receives touch information from the touch detection apparatus, converts it to touch coordinates, transmits the touch coordinates to the processor 506, and can receive a command sent by the processor 506 and execute the command.

The display unit 503 may be used to display information input by a user or information provided to the user and various graphical user interfaces of an electronic device that may be composed of graphics, text, icons, video, and any combination thereof. The display unit 503 may include a display panel. Optionally, the display panel may be configured in a form of a Liquid Crystal Display (LCD), an Organic Light-Emitting Diode (OLED), etc. Further, the touch-sensitive surface may cover the display panel, when the touch-sensitive surface detects the touch operation thereon or nearby, the touch operation is transmitted to the processor 506 to determine the type of a touch event, and then the processor 506 provides a corresponding visual output on the display panel according to the type of the touch event. Although the touch-sensitive surface and the display panel implement input and input functions by serving as two independent parts in Fig. 10, the touch-sensitive surface and the display panel may be integrated to implement the input and output functions in some embodiments.

The audio circuit 504 may provide an audio interface between the user and the electronic device through a loudspeaker and a microphone. The audio circuit 504 may transmit an electric signal converted from the received audio data to the loudspeaker, and the loudspeaker converts the electric signal into a sound signal for output. Besides, the microphone converts the collected sound signal into an electric signal, the audio circuit 504 converts the received electric signal into audio data and then outputs the audio data to the processor 506 for processing, the audio data is transmitted to another electronic device via the radio frequency circuit 501, or the audio data is output to the memory 501 for further processing. The audio circuit 504 may also include an earplug jack to provide communication of peripheral earphones with the electronic device.

WiFi belongs to a short-range wireless transmission technology, the electronic device may assist the user in E-mail receiving and sending, webpage browsing, access to streaming media and the like by means of the WiFi module 505, and it provides a wireless wideband internet access for the user. Although Fig. 10 shows the WiFi module 505, it may be understood that the WiFi module does not belong to necessary components of the electronic device and can be omitted completely as required within the scope of not changing the essence of the present invention.

The processor 506 is a control center of the electronic device, and is configured to connect all parts of the entire electronic device by utilizing various interfaces and lines, to run or execute an application program stored in the memory 501, and to call data stored in the memory 501 to execute various functions of the electronic device and process data, so as to wholly monitor the electronic device. Optionally, the processor 506 may include one or more processing cores. Preferably, the processor 506 may be integrated with an application processor and a modulation-demodulation processor, wherein the application processor mainly processes an operation system, a user interface, an application program and the like, and the modulation-demodulation processor mainly processes wireless communication. It may be understood that the modulation-demodulation processor may not be integrated into the processor 506.

The electronic device also includes a power supply 507 (such as a battery) that supplies power to various components. Preferably, the power supply may be connected to the processor 506 logically via a power supply management system, so as to implement functions of charging, discharging and power consumption management by means of the power supply management system. The power supply 507 may also include one or more DC or AC power supplies, a recharging system, a power failure detection circuit, a power converter or inverter, a power state indicator, and the like.

Although not shown in Fig. 10, the electronic device may further include a camera, a Bluetooth module, and the like, and details are not described herein.

During the specific implementation, the foregoing modules may be implemented as a separate entity, or may be implemented in any combination, and may be implemented as the same or a plurality of entities. The specific implementation of the foregoing modules refers to the foregoing method embodiments, and details are not described herein again.

It will be understood by those of ordinary skill in the art that all or part of the operations of the various methods in the above embodiments may be completed by instructions or completed by controlling related hardware through instructions, which may be stored in a computer-readable storage medium and loaded and executed by the processor. To this end, the embodiment of the present invention provides a storage medium in which multiple instructions are stored, which can be loaded by a processor to perform the operations in any of the game picture display methods provided by the embodiment of the present invention.

The storage medium may include a Read Only Memory (ROM), a RAM, a magnetic disk or an optical disk, and the like.

The operations in the game picture display method provided by the embodiment of the present invention can be performed by using the instructions stored in the storage medium. Therefore, the achievable beneficial effects of any of the game picture display methods provided by the embodiment of the present invention can be achieved, which refer to the previous embodiments, and details are not described herein again.

The specific implementation of the foregoing operations refers to the foregoing embodiments, and details are not described herein again.

In the above, although the present disclosure has been disclosed in the above preferred embodiments, the above preferred embodiments are not intended to limit the present disclosure, and those of ordinary skill in the art can make various changes and modifications without departing from the spirit and scope of the present disclosure. Therefore, the scope of protection of the present disclosure is subject to the scope defined by the claims.

## Claims

1. A game picture display method, applied to an electronic device, the game picture display method comprising:
receiving (101) a human body information capturing instruction sent by a server;
calling (102) a camera module to perform image capture on a user according to the human body information capturing instruction to obtain a color image and a depth image of a continuous frame;
determining (103), during the image capture, skeleton point information of the user according to the color image and the depth image;
sending (104) the skeleton point information to the server to enable the server to return a corresponding game picture according to the skeleton point information; and
displaying (105), in a display screen, the game picture returned by the server.

2. The game picture display method as claimed in claim 1, wherein the skeleton point information comprises two-dimensional coordinates of skeleton points, and determining (103) skeleton point information of the user according to the color image and the depth image comprises:
processing the color image and the depth image using a trained learning model to identify the skeleton points in the color image or the depth image; and
determining image coordinates of the skeleton points as the two-dimensional coordinates of the skeleton points.

3. The game picture display method as claimed in claim 1, wherein before receiving (101) a human body information capturing instruction sent by a server, the game picture display method further comprises:
displaying a preset selection interface, the preset selection interface comprising at least one game identifier;
calling a microphone module to capture voice information of the user;
determining a target game identifier from the at least one game identifier according to the voice information; and
generating a game request according to the target game identifier, and transmitting the game request to the server to enable the server to return the human body information capturing instruction according to the game request.

4. The game picture display method as claimed in claim 1, wherein after displaying (105), in a display screen, the game picture returned by the server, the game picture display method further comprises:
detecting whether an event to be processed is received, the event to be processed comprising at least one of the following: a message to be processed and a call to be processed;
dividing, in response to detecting that an event to be processed is received, the display screen into a first window and a second window in a preset ratio; and
displaying the game picture in the first window, and displaying the event to be processed in the second window.

5. The game picture display method as claimed in claim any one of claims 1 to 4, wherein displaying (105), in a display screen, the game picture returned by the server comprises:
detecting an ambient brightness of a surrounding environment;
determining a display brightness according to the ambient brightness; and
displaying, in a display screen according to the display brightness, the game picture returned by the server.

6. A game picture display method, applied to a server, the game picture display method comprising:
receiving (201) a game request sent by an electronic device, the game request carrying a target game identifier;
sending (202) a human body information capturing instruction to the electronic device according to the game request to enable the electronic device to return skeleton point information of a user according to the human body information capturing instruction;
determining (203) a game picture according to the skeleton point information returned by the electronic device and the target game identifier; and
sending (204) the game picture to the electronic device to enable the electronic device to display the game picture.

7. The game picture display method as claimed in claim 6, wherein determining (203) a game picture according to the skeleton point information returned by the electronic device and the target game identifier comprises:
determining limb motion information of the user according to the skeleton point information returned at adjacent moments;
determining a target instruction group from a plurality of preset instruction groups according to the target game identifier;
acquiring, from the target instruction group, a preset instruction corresponding to the limb motion information to serve as an interaction instruction; and
determining the game picture according to the interaction instruction.

8. The game picture display method as claimed in claim 7, wherein the skeleton point information comprises two-dimensional coordinates of skeleton points, and determining limb motion information of the user according to the skeleton point information returned at adjacent moments comprises:
determining a motion trajectory of corresponding skeleton points according to the two-dimensional coordinates returned at the adjacent moments;
determining a limb action of the user and an action amplitude of the limb action according to the motion trajectory; and
determining the limb action and the action amplitude as the limb motion information of the user.

9. The game picture display method as claimed in claim 7, wherein before determining limb motion information of the user according to the skeleton point information returned at adjacent moments, the game picture display method further comprises:
determining a limb posture corresponding to the two-dimensional coordinates returned at a current moment;
judging whether the limb posture matches a preset starting posture;
in response to judging that the limb posture matches the preset starting posture, performing the operation of determining the limb motion information of the user according to the skeleton point information returned at adjacent moments; and
in response to judging that the limb posture does not match the preset starting posture, acquiring two-dimensional coordinates of skeleton points returned at a next moment as two-dimensional coordinates of skeleton points at a current moment, and returning to perform the operation of determining a limb posture corresponding to the two-dimensional coordinates of the skeleton points at a current moment.

10. The game picture display method as claimed in any one of claims 6 to 9, wherein sending (204) the game picture to the electronic device to enable the electronic device to display the game picture comprises:
detecting a network state of the electronic device;
adjusting a size of the game picture according to the network state; and
sending the adjusted game picture to the electronic device to enable the electronic device to display the adjusted game picture.

11. A game picture display apparatus, applied to an electronic device, the apparatus comprising:
a receiving module (10) configured to receive a human body information capturing instruction sent by a server;
a capturing module (20) configured to call a camera module to perform image capture on a user according to the human body information capturing instruction to obtain a color image and a depth image of a continuous frame;
a determination module (30) configured to determine, during the image capture, skeleton point information of the user according to the color image and the depth image;
a sending module (40) configured to send the skeleton point information to the server to enable the server to return a corresponding game picture according to the skeleton point information; and
a display module (50) configured to display, in a display screen, the game picture returned by the server.

12. A game picture display apparatus, applied to a server, the apparatus comprising:
a receiving module (80) configured to receive a game request sent by an electronic device, the game request carrying a target game identifier;
a first sending module (90) configured to send a human body information capturing instruction to the electronic device according to the game request to enable the electronic device to return skeleton point information of a user according to the human body information capturing instruction;
a determination module (100) configured to determine a game picture according to the skeleton point information returned by the electronic device and the target game identifier; and
a second sending module (110) configured to send the game picture to the electronic device to enable the electronic device to display the game picture.

13. A computer-readable storage medium, having a plurality of instructions stored therein, the instructions being adapted to be loaded by a processor to perform the game picture display method as claimed in any one of claims 1 to 5.

14. A computer-readable storage medium, having a plurality of instructions stored therein, the instructions being adapted to be loaded by a processor to perform the game picture display method as claimed in any one of claims 6 to 10.

15. An electronic device (400), comprising a processor (401) and a memory (402), the processor (401) being electrically connected to the memory (402), the memory (402) being configured to store instructions and data, and the processor (401) being configured to perform the operations of the game picture display method as claimed in any one of claims 1 to 5.
